# EUROPÄISCHE PATENTANMELDUNG

(11) **EP 1 250 844 A2**
(43) Veröffentlichungstag der Anmeldung: **23.10.2002**
(21) Anmeldenummer: 02007604.8
(22) Anmeldetag: 04.04.2002
(51) Int. Cl.: A21D 2/36, A21D 2/26

(54) **Backteig enthaltend pflanzliches Material**

(30) Priorität: 18.04.2001 DE 10119732
(71) Anmelder: VK Mühlen Food Service GmbH, 21107 Hamburg (DE)
(72) Erfinder: Kipping, Felix, 21244 Rosengarten (DE); Senneka, Jürgen, 20257 Hamburg (DE); Oelker, Nina, 21073 Hamburg (DE); Persin, Christoph, Dr., 21075 Hamburg (DE)
(74) Vertreter: Patentanwälte Hauck, Graalfs, Wehnert, Döring, Siemons, Schildberg

(57) **Zusammenfassung**

Teig, insbesondere Backteig für Brot, Kuchen und dergleichen sowie sonstige Teige als Basis für Extrudate, auf der Basis von Mehl, Wasser und Salz, mit mindestens zwei Zutaten ausgewählt aus einer oder mehrerer der folgenden Gruppen:
Fabaceae, Gramineae, Chenopodiaceae, Amranthaceae, Euphorbiaceae, Polygonaceae, Panizeen,
wobei die essentiellen Aminosäuren der Zutaten sich derart ergänzen, daß von allen Quotienten aus einem Bedarfswert für die essentielle Aminosäure im Organismus und Gehalt der essentiellen Aminosäure in dem Teig der kleinste Quotient größer ist als der kleinste Quotient bei jeder einzelnen Zutat.

## Beschreibung

Die Erfindung betrifft einen Teig, insbesondere einen Backteig für Brot, Kuchen und dergleichen sowie einen sonstigen Teig als Basis für Extrudate.

Bei Menschen ist Eiweiß einer der wichtigsten Stoffe zur Erhaltung der Gesundheit und Vitalität. Das Eiweiß wird benötigt, um verbrauchtes oder geschwächtes Zellmaterial wieder herzustellen. Das mit der Nahrung aufgenommene Eiweiß wird während der Verdauung in Aminosäuren zerlegt. Die Aminosäuren können durch die Darmwand ins Blut aufgenommen werden. Der menschliche Körper benötigt ständig Aminosäuren, die vom menschlichen Organismus nicht selbst synthetisiert werden können und daher mit der Nahrung zugeführt werden müssen. Diese werden als essentielle Aminosäuren bezeichnet. Die Bedarfswerte für die essentiellen Aminosäuren hängen beispielsweise vom Alter des Menschen ab.

Aus DE 195 09 660 ist eine Rezeptur für proteinreiche Brot-, Teig- und süße Backwaren bekannt. Bei dem bekannten Teig werden Caseinate mit etwa 5 bis 15 Gew.-%, bezogen auf den Mehlanteil des Teiges, zugesetzt. Bei den Caseinaten handelt es sich um eine wasserlösliche Verbindung zwischen Alkali- bzw. Erdalkalimetallen und Caseinen. Caseine stellen den Hauptproteinanteil der Milch dar. Bei der bekannten Rezeptur wird also ein Teig mit Proteinen der Milch angereichert, um den Gesamteiweißgehalt des Teiges zu erhöhen.

Der Erfindung liegt die Aufgabe zugrunde, einen Teig zu schaffen, der mit einfachen und kostengünstigen Zutaten eine wirkungsvolle Ergänzung und Versorgung mit essentiellen Aminosäuren bereitstellt.

Die Aufgabe wird gelöst durch einen Teig mit den Merkmalen aus Anspruch 1.

Bei dem erfindungsgemäßen Teig handelt es sich bevorzugt um einen Backteig für Brot, Kuchen und dergleichen. Basis eines solchen Teiges ist Mehl, Wasser und Salz. Erfindungsgemäß weist der Teig mindestens zwei Zutaten auf, die aus den Gruppen Fabceae, Gramineae, Chenopodiacea, Amaranthaceae, Euphorbiaceae, Polygonaceae, Panizeen ausgewählt sind. Aus den Gruppen werden die Zutaten derart ausgewählt und gemischt, daß für essentielle Aminosäuren der kleinste Quotient aus Bedarfswert für die essentielle Aminosäure und Gehalt der essentiellen Aminosäure bei der Kombination der Zutaten möglichst groß ist. Hierfür wird für jede essentielle Aminosäure der Quotient aus Bedarfswert für den Organismus und Gehalt in dem Teig bestimmt. Die Kombination ist so gewählt, daß der kleinste Quotient größer als der kleinste Quotient bei jeder Zutat ist. Der zuvor genannte Quotient wird als AAS (Amino Acid Score) bezeichnet. Der AAS-Wert kann noch mit einer Größe für die Proteinverdaulich multipliziert werden, um einer unterschiedlichen Aufnahme von Proteinen durch den Körper Rechnung zu tragen. Erfindungsgemäß werden dem Teig mindestens zwei Zutaten zugesetzt. Die Zutaten werden so ausgewählt, daß ihr Gehalt an essentiellen Aminosäuren sich ergänzt. Die Mischung besitzt erfindungsgemäß einen AAS-Wert, der höher als sämtliche einzelnen AAS-Werte der Zutaten liegt. Für einen höheren Eiweißgehalt des Teiges wird also nicht auf den Gesamteiweißgehalt abgestellt, sondern die Zutaten werden unter Berücksichtigung ihres individuellen Gehalts an essentiellen Aminosäuren miteinander kombiniert. Der Organismus kann nur soviel Protein neu synthetisieren, wie es die Konzentration der essentiellen Aminosäure erlaubt, die das größte Defizit aufweist. Fehlt also eine der essentiellen Aminosäuren -dies ist die sogenannte begrenzende Aminosäure-, so kann im Körper nur unzureichend Protein synthetisiert werden. Bei dem erfindungsgemäßen Teig werden Zutaten kombiniert, um einen möglichst hohen Gehalt an essentiellen Aminosäuren aufzuweisen, und so möglichst viel Eiweiß synthetisiert werden kann.

Bei bevorzugten Zusammenstellungen der Zutaten besitzt der kleinste Quotient einen Wert größer als 0,94, bevorzugt größer als 1,19. In dieser Weiterführung besitzt der Teig einen AAS-Wert, der besser als der AAS-Wert von Rindfleisch mit 0,94 ist. 1,19 ist der AAS-Wert von Caseinen, der bevorzugt ebenfalls übertroffen wird.

Bevorzugt sind die Zutaten mit weniger als 15 Gew.-% enthalten. Eine Beimischung der Zutaten in diesen Mengen stellt sicher, daß der Teig weiterhin wie ein herkömmlicher Teig verarbeitet werden kann.

In einer möglichen Auswahl der Zutaten weist der Teig weniger als 10 Gew.-% Erbsen und weniger als 10 Gew.-% Amaranth auf. Hierbei können sowohl Erbsen als auch Amaranthkörner in unterschiedlicher Form als Ausgangsprodukt für den Teig dienen. In einer weiteren Mischung der Zutaten ist zusätzlich weniger als 15 Gew.-% Quinoa im Teig enthalten. Auch Soja kann mit einem Anteil von weniger als 15 Gew.-% dem Teig zugesetzt sein.

Aus der Gruppe der Fabaceae werden als Zutaten bevorzugt Soja, Erbsen, Bohnen und Linsen ausgewählt. Aus der Gruppe der Gramineae werden insbesondere Weizen, Roggen und Reis ausgewählt. Aus der Gruppe der Chenopodiaceae wird bevorzugt Quinoa ausgewählt. Aus der Gruppe der Amaranthaceae wird als bevorzugte Zutat Amaranth ausgewählt. Aus der Gruppe der Euphorbiaceae wird bevorzugt Topinambur als Zutat eingesetzt. Aus der Gruppe der Polygonaceae wird bevorzugt Buchweizen gewählt. In der Gruppe der Panizeen wird bevorzugt eine Hirsesorte ausgewählt.

Zur weiteren Erhöhung des AAS-Wertes, des erfindungsgemäßen Teiges kann zusätzlich noch tierisches Protein dem Teig zugesetzt sein. Bevorzugt werden hierbei Hühnereiweiß, Milcheiweiß und/oder Molke verwendet.

Die Erfindung wird nachfolgend anhand von Rezepturen, und einen Herstellverfahren näher erläutert:
- Rezeptur 1:: 42,5 Gew.-% Mehl Type 550 29 Gew.-% Wasser 15 Gew.-% Erbsen 5 Gew.-% Mehl Type 1800 2 Gew.-% Quinoa 2 Gew.-% Amaranth 2 Gew.-% Kartoffelflocken 1,5 Gew.-% Salz 1 Gew.-% Hefe.

Die vorstehende Zusammensetzung besitzt einen AAS-Wert von 1,18.

Bei der vorstehenden Rezeptur wurden die Zutaten so kombiniert, daß für sämtliche essentiellen Aminosäuren der Gehalt in dem Brot größer ist als der Bedarfswert bei einem Erwachsenen. Von den essentiellen, stehen also ausreichend für die Synthese von Eiweiß zur Verfügung. Die die Synthese begrenzende Aminosäure ist 1,18-fach mehr als der Bedarfswert vorhanden. Üblicherweise werden die Werte für Gehalt und Bedarf einer essentiellen Aminosäure in mg/g Protein angegeben.

Weitere Rezepturen für den Teig sind:
- Rezeptur 2:: 42,5 Gew.-% Mehl Type 550 29 Gew.-% Wasser 15 Gew.-% Erbsen 6 Gew.-% Amaranth 5 Gew.-% Mehl Type 1800 1,5 Gew.-% Salz 1 Gew.-% Hefe

Die vorstehende Zusammensetzung besitzt einen AAS-Wert von 1,22.
- Rezeptur 3:: 42,5 Gew.-% Mehl Type 550 29 Gew.-% Wasser 15 Gew.-% Erbsen 6 Gew.-% Quinoa 5 Gew.-% Mehl Type 1800 1,5 Gew.-% Salz 1 Gew.-% Hefe

Die vorstehende Zusammensetzung besitzt einen AAS-Wert von 1,21.
- Rezeptur 4:: 42,5 Gew.-% Mehl Type 550 29 Gew.-% Wasser 15 Gew.-% Amaranth 5 Gew.-% Mehl Type 1800 2 Gew.-% Quinoa 2 Gew.-% Erbsen 2 Gew.-% Kartoffelflocken 1,5 Gew.-% Salz 1 Gew.-% Hefe

Die vorstehende Zusammensetzung besitzt einen AAS-Wert von 1,11.
- Rezeptur 5:: 42,5 Gew.-% Mehl Type 550 29 Gew.-% Wasser 15 Gew.-% Kartoffelflocken 5 Gew.-% Mehl Type 1800 2 Gew.-% Quinoa 2 Gew.-% Amaranth 2 Gew.-% Erbsen 1,5 Gew.-% Salz 1 Gew.-% Hefe

Die vorstehende Zusammensetzung besitzt einen AAS-Wert von 1,05.
- Rezeptur 6:: 42,5 Gew.-% Mehl Type 550 29 Gew.-% Wasser 15 Gew.-% Quinoa 5 Gew.-% Mehl Type 1800 2 Gew.-% Erbsen 2 Gew.-% Amaranth 2 Gew.-% Kartoffelflocken 1,5 Gew.-% Salz 1 Gew.-% Hefe

Die vorstehende Zusammensetzung besitzt einen AAS-Wert von 1,10.
- Rezeptur 7:: 44,2 Gew.-% Mehl Type 550 29 Gew.-% Wasser 10,8 Gew.-% Soja 7,5 Gew.-% Erbsen 2 Gew.-% Quinoa 2 Gew.-% Amaranth 2 Gew.-% Kartoffelflocken 1,5 Gew.-% Salz 1 Gew.-% Hefe

Die vorstehende Zusammensetzung besitzt einen AAS-Wert von 1,09.
- Rezeptur 8:: 42,9 Gew.-% Mehl Type 550 28,8 Gew.-% Wasser 12,5 Gew.-% Erbsen 2,5 Gew.-% Eiweiß 2,2 Gew.-% Leinsamen 2,2 Gew.-% Sonnenblumenkerne 2 Gew.-% Quinoa 2 Gew.-% Amaranth 2 Gew.-% Kartoffelflocken 1,5 Gew.-% Salz 1 Gew.-% Hefe 0,4 Gew.-% Soja

Die vorstehende Zusammensetzung besitzt einen AAS-Wert von 1,13.
- Rezeptur 9:: 42,9 Gew.-% Mehl Type 550 28,8 Gew.-% Wasser 10 Gew.-% Erbsen 2,5 Gew.-% Eiweiß 2,5 Gew.-% Süßmolke 2,2 Gew.-% Leinsamen 2,2 Gew.-% Sonnenblumenkerne 2 Gew.-% Quinoa 2 Gew.-% Amaranth 1,5 Gew.-% Salz 1 Gew.-% Hefe 0,4 Gew.-% Soja

Die vorstehende Zusammensetzung besitzt einen AAS-Wert von 1,12.

Bei einem möglichen Verarbeitungsverfahren, insbesondere für den zuerst genannten Teig, wird bei einer Teigtemperatur von 27°C bis 28°C der Teig zunächst eine Minute im ersten Gang und anschließend drei Minuten im zweiten Gang geknetet. Nach einer Teigruhe von 30 min wird der Teig abgewogen, dabei gibt eine Teigeinlage von 850g Brot mit einem Gewicht von 750g. Der Teig wird rund gewirkt und lang gerollt, wobei die Oberfläche beispielsweise mit Aurora Saaten klebend eingestrichen und kräftig in Sonnenblumenkernen/Kürbiskernen (50/50) gewälzt wird. Zur Gare wird der Teig mit dem Schluß nach unten auf den Abzieher gesetzt. Vor dem Backen wird der Teig geschnitten. Die Backzeit beträgt 45 min, wobei die Temperatur von 250°C auf 200°C fällt.

## Patentansprüche

1. Teig, insbesondere Backteig für Brot, Kuchen und dergleichen sowie sonstiger Teig als Basis für Extrudate, auf der Basis von Mehl, Wasser und Salz, mit mindestens zwei Zutaten ausgewählt aus einer oder mehrerer der folgenden Gruppen:
Fabaceae, Gramineae, Chenopodiaceae, Amranthaceae, Euphorbiaceae, Polygonaceae, Panizeen,
wobei die essentiellen Aminosäuren der Zutaten sich derart ergänzen, daß von allen Quotienten aus einem Bedarfswert für die essentielle Aminosäure im Organismus und Gehalt der essentiellen Aminosäure in dem Teig der kleinste Quotient größer ist als der kleinste Quotient bei jeder einzelnen Zutat.

2. Teig nach Anspruch 1, **dadurch gekennzeichnet, daß** der kleinste Quotient größer als 0,94, bevorzugt 1,19 ist.

3. Teig nach Anspruch 1 oder 2, **dadurch gekennzeichnet, daß** die Zutaten mit weniger als 15 Gew.-% enthalten sind.

4. Teig nach Anspruch 2 oder 3, **dadurch gekennzeichnet, daß** weniger als 10 Gew.-% Erbsen und weniger als 10 Gew.-% Amaranth enthalten sind.

5. Teig nach Anspruch 3 oder 4, **dadurch gekennzeichnet, daß** zusätzlich weniger als 10 Gew.-% Quinoa zugesetzt ist.

6. Teig nach einem der Ansprüche 1 bis 5, **dadurch gekennzeichnet, daß** Soja mit weniger als 15 Gew.-% zugesetzt ist.

7. Teig nach einem der Ansprüche 1 bis 6, **dadurch gekennzeichnet, daß** aus der Gruppe der Fabaceae bevorzugt Soja, Erbsen, Bohnen und/oder Linsen ausgewählt wird.

8. Teig nach einem der Ansprüche 1 bis 7, **dadurch gekennzeichnet, daß** aus der Gruppe der Gramineae bevorzugt Weizen, Roggen und/oder Reis ausgewählt wird.

9. Teig nach einem der Ansprüche 1 bis 8, **dadurch gekennzeichnet, daß** aus der Gruppe der Amaranthaceae bevorzugt Amaranth ausgewählt wird.

10. Teig nach einem der Ansprüche 1 bis 9, **dadurch gekennzeichnet, daß** aus der Gruppe Euphorbiaceae bevorzugt Topinambur ausgewählt wird.

11. Teig nach einem der Ansprüche 1 bis 10, **dadurch gekennzeichnet, daß** aus der Gruppe der Polygonanceae bevorzugt Buchweizen ausgewählt wird.

12. Teig nach einem der Ansprüche 1 bis 11, **dadurch gekennzeichnet, daß** aus der Gruppe der Panizeen bevorzugt Hirse ausgewählt wird.

13. Teig nach einem der Ansprüche 1 bis 12, **dadurch gekennzeichnet, daß** zusätzlich tierische Proteine dem Teig zugesetzt sind.

14. Teig nach Anspruch 13, **dadurch gekennzeichnet, daß** als tierisches Protein Hühnereiweiß zugesetzt ist.

15. Teig nach Anspruch 13 und 14, **dadurch gekennzeichnet, daß** als tierisches Protein Milcheiweiß zugesetzt ist.

16. Teig nach einem der Ansprüche 13 bis 15, **dadurch gekennzeichnet, daß** als tierisches Eiweiß Molke zugesetzt ist.
